# EUROPEAN PATENT APPLICATION

(11) **EP 1 995 098 A1**
(43) Date of publication of application: **26.11.2008**
(21) Application number: 07108701.9
(22) Date of filing: 22.05.2007
(51) Int. Cl.: B60J 5/10, B60R 19/04, B60R 19/18

(54) **A rear bumper assembly for a motor vehicle**

(71) Applicant: Ford Global Technologies, LLC, Dearborn, MI 48126 (US)
(72) Inventor: Stanesby, Daniel Jaguar Cars Limited, Benfleet, Essex SS7 3TF (GB); Agius, Alicia Ford Motor Company Limited, Bournemouth, Dorset BH11 9UB (GB); Farrelly, William Ford Motor Company Limited, Chelmsford, Essex CM2 6HB (GB)
(74) Representative: Grunfeld, David Peter

(57) **Abstract**

A rear bumper assembly (15;115) for a motor vehicle (10;110) is disclosed comprising of a structural member (19) extending transversely across a rear end of the motor vehicle (10;110) and a bumper cover (16;116) overlying the structural member (19) so as to obscure it from view. One or more portions (16L,16R;116C) of the bumper cover (16;116) are selectively removable to permit loading of the motor vehicle (10;110) to occur without risking damage to the bumper cover (16;116). Preferably, each of the removable portions (16L,16R;116C) of the bumper cover (16;116) is attached to a lower end of a respective closure member (14L,14R;114) so as to be automatically removed when loading or unloading of the motor vehicle (10;110) is required.

## Description

This invention relates to motor vehicles and in particular to a rear bumper assembly for a motor vehicle.

It is well known to provide a rear bumper assembly for a motor vehicle to absorb and transfer force in the event that the motor vehicle is impacted from the rear.

Such a prior art bumper assembly normally comprises of a structural member or bumper beam that extends transversely across the motor vehicle and a bumper cover, sometimes known as a bumper skin or bumper fascia that overlies the structural member, obscures the structural member from view and provides a decorative finish to the bumper assembly.

It is a problem with such a rear bumper assembly that it is prone to damage when articles are loaded or unloaded from the motor vehicle as the bumper assembly is normally located below an aperture providing access to a load carrying space of the motor vehicle.

This is particularly the case with existing van bumpers which are often exposed to damage from vehicle loading, working on the back of the vehicle, workers stepping into and out of the van and building material spillage such as cement, paint etc.

Such damage to the rear bumper assembly can portray an unprofessional image because the van looks untidy and in general reduces the resale value of the motor vehicle.

It is an object of this invention to provide a rear bumper assembly for a motor vehicle that is less prone to damage.

According to a first aspect of the invention there is provided a rear bumper assembly for a motor vehicle comprising a structural member extending transversely across the motor vehicle and a bumper cover overlying the structural member so as to obscure the structural member from view during normal use of the motor vehicle wherein the bumper cover includes at least one removable portion that can be removed during loading of the motor vehicle so as to expose the structural member and prevent damage occurring to the bumper cover.

Preferably, the or each removable portion may be attached to a rear closure member of the motor vehicle and the or each removable portion may be moved with the respective rear closure member to which it is attached when the rear closure member is moved to provide access to a load carrying compartment of the motor vehicle.

The or each removable portion may be attached to a rear closure member of the motor vehicle and the or each removable portion may be moved with the respective closure member to which it is attached when the rear closure member is moved to close off access to a load carrying compartment of the motor vehicle.

The or each closure member may be a rear door.

The rear door may be a side hinged rear door.

The motor vehicle may have two rear doors each of which has a respective removable portion of the bumper cover attached thereto. The rear bumper cover may comprise of two outboard fixed bumper cover portions and two inboard removable bumper cover portions.

The rear door may be a top hinged rear door and the motor vehicle may have a single rear door to which a removable portion of the bumper cover is attached.

Alternatively, the rear bumper assembly the rear door may be a top hinged rear door and the motor vehicle may have a single rear door to which a removable portion of the bumper cover is attached.

In either case, the rear bumper cover may comprise of two outboard fixed bumper cover portions and a single inboard removable bumper cover portion.

The or each removable portion may be attached to its respective closure member by being fastened thereto.

The or each removable portion may be attached to its respective closure member by means of a fastening means selected from adhesive bonding, riveting, threaded fasteners and snap lock connectors.

Alternatively, the or each removable portion may be attached to its respective closure member by being formed as an integral part of the respective closure member.

The structural member may be an elongate tubular bumper beam. The bumper cover may be made from a resilient plastic material.

At least a part of the structural member may be coated with a resilient wear resistant material.

According to a second aspect of the invention there is provided a motor vehicle having a body structure defining a load carrying compartment, at least one rear closure member moveably supported by part of the body structure of the motor vehicle to provide access to the load carrying compartment so as permit the motor vehicle to be loaded or unloaded and a rear bumper assembly constructed in accordance with said first aspect of the invention.

The invention will now be described by way of example with reference to the accompanying drawing of which:-
Fig.1 is a pictorial view of part of a rear end of a motor vehicle having a bumper assembly according to the invention;
Fig.2 is an enlarged pictorial view of part of a right hand side rear door of the motor vehicle shown in Fig.1;
Fig.3 is a cross-section through a rear bumper assembly according to the invention along the line X-X on Fig.1; and
Fig.4 is a pictorial view of part of a rear end of a motor vehicle having a bumper assembly according to an alternative embodiment of the invention.

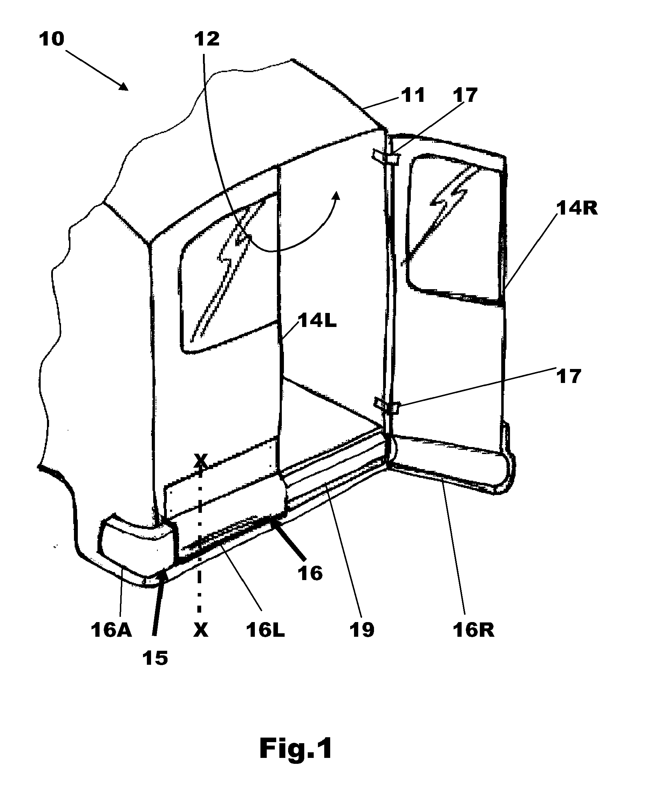

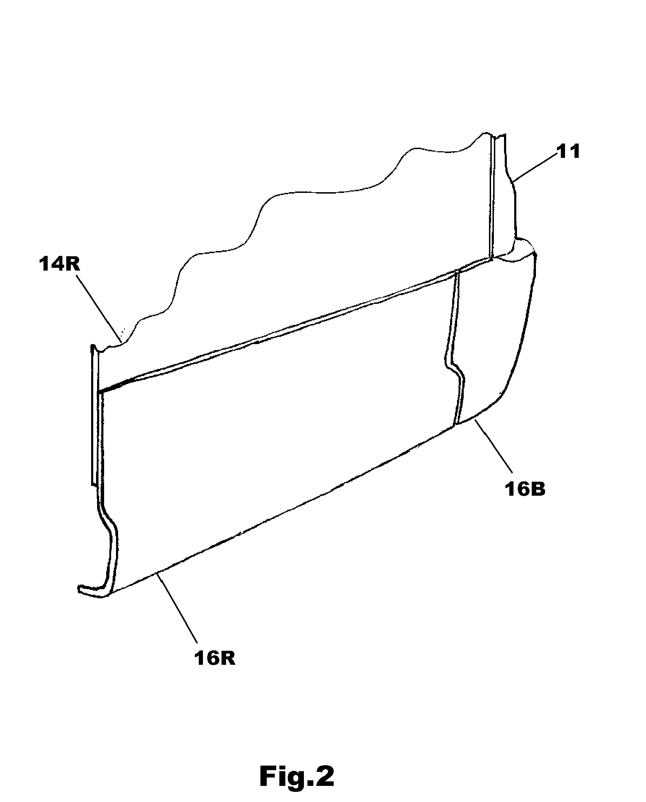

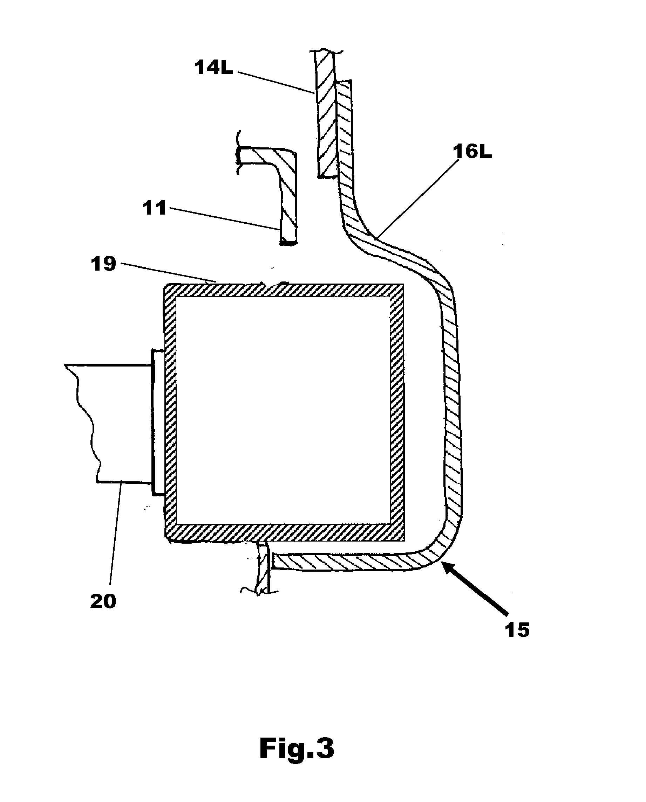

Referring firstly to Figs.1 to 3 there is shown a motor vehicle 10 having a body structure 11 defining a load carrying compartment 12, a pair of rear closure members in the form of left and right side hinged rear doors 14L and 14R moveably supported by part of the body structure of the motor vehicle 10 in the form of hinges 17 to provide access to the load carrying compartment 12 so as permit the motor vehicle 10 to be loaded or unloaded. A rear bumper assembly 15 is attached to a rear end of the motor vehicle 10.

The rear bumper assembly 15 comprises of a structural member in the form of an elongate tubular bumper beam 19 extending transversely across the motor vehicle 10 to which the rear bumper assembly is attached and a bumper cover 16 overlying the bumper beam 19 so as to obscure it from view during normal use of the motor vehicle 10. The bumper beam 19 is fastened to the motor vehicle 10 by means of two or more collapsible mountings such as a crush cans 20 so as to partially absorb the force of impact if the motor vehicle 10 is hit from the rear. Other energy absorbing materials (not shown) may be incorporated into the bumper assembly such as foam in order to further absorb energy in the event of a rear impact.

The bumper cover 16 is made from a resilient plastic material so that it can accommodate minor impacts without suffering significant permanent damage.

The bumper cover 16 includes at least one removable portion 16L, 16R that can be removed during loading of the motor vehicle 10 so as to expose the bumper beam 19 and prevent damage occurring to the bumper cover 16 and, in this example, the rear bumper cover 16 comprises of two outboard fixed bumper cover portions 16A, 16B and two inboard removable bumper cover portions 16L, 16R.

Each of the two rear doors 14L, 14R of the motor vehicle 10 has a respective removable portion 16L, 16R of the bumper cover 16 attached thereto. Each of the removable portions 16L, 16R is moved with the respective door 14L, 14R to which it is attached when the door 141, 14R is moved or opened to provide access to the load carrying compartment 12 of the motor vehicle 10 and when the door 141, 14R is moved or closed to close off access to the load carrying compartment 12 of the motor vehicle 10.

Each of the removable portions 16L, 16R is attached to its respective door 14L, 14R by means of a fastening means (not shown) selected from adhesive bonding, riveting, threaded fasteners and snap lock connectors.

Although not shown, an upper surface or the entire outer surface of the bumper beam 19 may be coated with a resilient wear resistant material so as to reduce the risk of abrasive damage occurring to the bumper beam 19. The wear resistant material may also be a high friction material so as to reduce the risk of slipping if the bumper beam is used as a step.

During normal use of the motor vehicle 10 the bumper cover 16 fully covers the bumper beam 19 so that the bumper beam 19 is obscured from view. However, when either of the two rear doors 14L, 14R is opened it takes with it the respective removable bumper portion 16L, 16R so that the bumper beam 19 is then exposed along the length previously covered by the respective removable portion 16L, 16R.

Therefore, if during loading or unloading of the motor vehicle 10, an article is dropped it will only impact against the bumper beam 19 and will not damage the bumper cover 16 because the adjacent removable portion 16L, 16R of the bumper cover 16 has been removed when the respective door 14L, 14R was opened.

The same goes if any material is spilled during loading or unloading, it will only spoil the appearance of the bumper beam 19 and not the bumper cover 16.

Also, the fact that the bumper beam 19 is structurally strong, means that the bumper beam 19 can be used as a step for aiding ingress or egress from the motor vehicle 10 without any risk of damaging the bumper cover 16.

Although the invention has been described above with respect to a motor vehicle having two side hinged doors it will be appreciated that it is equally applicable to a motor vehicle having a single side hinged door or to a motor vehicle having a single top hinged door such as a tailgate, trunk lid or hatchback. However in this case the bumper cover will comprise of two outboard fixed bumper cover portions and a single inboard removable bumper cover portion attached to the rear closure member.

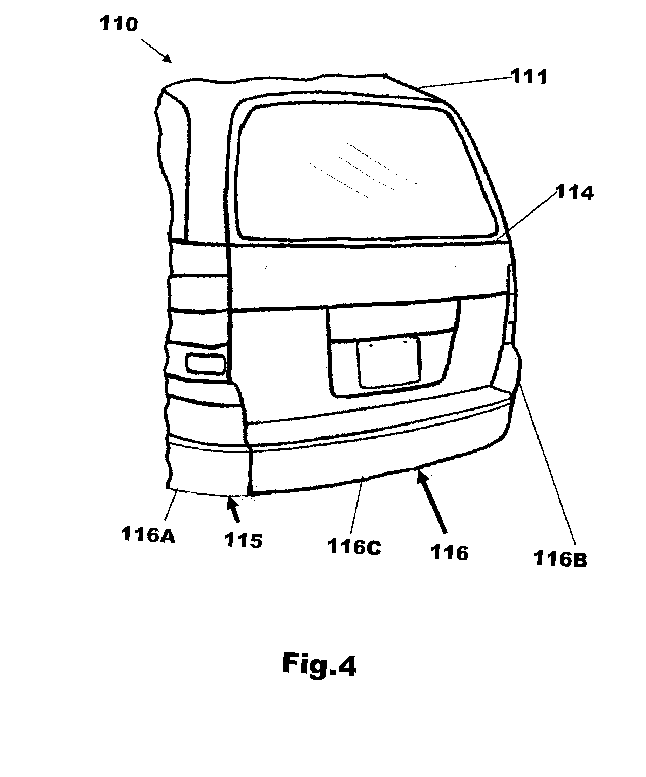

With respect to Fig.4 of the accompanying drawing there is shown an alternative embodiment of the invention as applied to a motor vehicle 110. The motor vehicle 110 which, in this case, is a multi-purpose vehicle (MPV) has a body structure 111 defining a load carrying compartment (not shown). A single rear closure member in the form of a top hinged rear door 114 is moveably supported by part of the body structure of the motor vehicle 110 in the form of a pair of spaced apart hinges (not shown) to provide access to the load carrying compartment. The top hinged door 114 permits, when it is opened, the motor vehicle 10 to be loaded or unloaded.

A rear bumper assembly 115 is attached to a rear end of the motor vehicle 110. The rear bumper assembly 115 comprises of a structural member in the form of an elongate tubular bumper beam (not shown) extending transversely across the motor vehicle 110 and a bumper cover 116 overlying the bumper beam so as to obscure it from view during normal use of the motor vehicle 110.

As is well know in the art, the bumper beam is fastened to the motor vehicle 10 by means of two of more collapsible mountings so as to partially absorb the force of impact if the motor vehicle 110 is hit from the rear. Other energy absorbing materials (not shown) may be incorporated into the bumper assembly in order to further absorb energy in the event of a rear impact.

The bumper cover 116 includes a removable portion 116C that can be removed during loading of the motor vehicle 110 so as to expose the bumper beam and prevent damage occurring to the bumper cover 116. In this case the single removable bumper cover portion 116C is flanked by two outboard fixed bumper cover portions 116A, 116B.

The removable portion 116C of the bumper cover 116 is attached to the top hinged rear door 114 by being formed as an integral part thereof and therefore moves with the rear door 114. It will be appreciated that integrally forming the removable cover portion with the rear closure member could be used for side hinged doors as well as for the top hinged door described herein.

The rear door 114 and the bumper cover 116 are both made from a resilient plastic material chosen such that it can accommodate minor impacts to the removable portion 116C without suffering permanent damage.

As before, an upper surface or the entire outer surface of the bumper beam may be coated with a resilient wear resistant material so as to reduce the risk of abrasive damage occurring to the bumper beam and the wear resistant material may also be a high friction material so as to reduce the risk of slipping if the bumper beam is used as a step.

During normal use of the motor vehicle 110 the bumper cover 116 fully covers the bumper beam so that the bumper beam is obscured from view. However, when the rear door 114 is opened it takes with it the respective removable bumper portion 116C so that the bumper beam is then exposed along the length previously covered by the removable portion 116C.

Therefore, as before, if during loading or unloading of the motor vehicle 110, an article is dropped or any material is spilled it will only cause damage to the bumper beam and will not damage the bumper cover 116 because the adjacent removable portion 116C of the bumper cover 116 has been removed when the door 114 was opened.

Although in preferred embodiments of the invention the removable portion or portions are attached to an adjacent rear door, this need not be the case and the removable portion or portions could simply be pulled off and placed out of harms way during loading or unloading of the motor vehicle.

Therefore in summary the invention provides a bumper cover that is split into several parts one or more of which is attached to an adjacent rear door such that it is moved with the rear door. When the door or doors are open the bumper beam is exposed and because this beam is made from a robust material it can take a knock when the vehicle is being loaded. When the door or doors are closed any scuffing or damage to the bumper beam is hidden by the bumper cover.

The bumper beam when it is exposed can also act as a step to aid ingress and improve access to the vehicle roof if a roof-rack is fitted to aid loading of the roof rack.

The following customer benefits are derived from a bumper assembly according to the invention:-
when the door(s) is/are open, the bumper beam provides a durable work and loading area; and
when the door(s) is/are closed, a smart & professional appearance is produced by the undamaged bumper cover.

Key Attributes of the invention are:-
the robust bumper beam can take a knock such as from a forklift when the motor vehicle is being loaded; and
the bumper beam can be coated so as to provide a 'wear resistant' step & work area.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention.

## Claims

1. A rear bumper assembly (15; 115) for a motor vehicle comprising a structural member (19) extending transversely across the motor vehicle (10; 110) and a bumper cover (16; 116) overlying the structural member (19) so as to obscure the structural member (19) from view during normal use of the motor vehicle (10; 110) **characterised in that** the bumper cover (16; 116) includes at least one removable portion (16L, 16R; 16C) that can be removed during loading of the motor vehicle (10; 110) so as to expose the structural member (19) and prevent damage occurring to the bumper cover (16; 116).

2. A rear bumper assembly as claimed in claim 1 wherein the or each removable portion (16L, 16R; 16C) is attached to a rear closure member (14L, 14R; 114) of the motor vehicle (10; 110) and the or each removable portion (16L, 16R; 16C) is moved with the respective rear closure member (14L, 14R; 114) to which it is attached when the rear closure member (14L, 14R; 114) is moved to provide access to a load carrying compartment (12) of the motor vehicle (10; 110) .

3. A rear bumper assembly as claimed in claim 2 wherein the or each closure member is a rear door (14L, 14R; 114) .

4. A rear bumper assembly as claimed in claim 3 wherein the rear door is a side hinged rear door and the motor vehicle has two rear doors (14L, 14R) each of which has a respective removable portion (16L, 16R) of the bumper cover (16) attached thereto.

5. A rear bumper assembly as claimed in claim 4 wherein the bumper cover (16) comprises of two outboard fixed bumper cover portions (16A, 16B) and two inboard removable bumper cover portions (16L, 16R).

6. A rear bumper assembly as claimed in claim 3 wherein the rear door is a top hinged rear door and the motor vehicle (110) has a single rear door (114) to which a removable portion (116C) of the bumper cover (116) is attached.

7. A rear bumper assembly as claimed in claim 6 wherein the rear bumper cover comprises of two outboard fixed bumper cover portions and a single inboard removable bumper cover portion.

8. A rear bumper assembly as claimed in any of claims 1 to 7 wherein the or each removable portion is attached to its respective closure member by being fastened thereto.

9. A rear bumper assembly as claimed in any of claims 1 to 7 wherein the or each removable portion is attached to its respective closure member by being formed as an integral part of the respective closure member.

10. A motor vehicle having a body structure defining a load carrying compartment, at least one rear closure member moveably supported by part of the body structure of the motor vehicle to provide access to the load carrying compartment so as permit the motor vehicle to be loaded or unloaded and a rear bumper assembly as claimed in any of claims 1 to 9 attached to a rear end of the motor vehicle.
